# FASCICULE DE BREVET EUROPEEN

(11) **EP 1 263 576 B1**
(45) Date de publication et mention de la délivrance du brevet: **06.08.2003**
(21) Numéro de dépôt: 01907807.0
(22) Date de dépôt: 15.02.2001
(51) Int. Cl.: B32B 15/08, B32B 15/14

(54) **T LE COMPOSITE STRATIFIEE FORMABLE, PROCEDE DE FABRICATION DE CETTE T LE ET PIECES DE CARROSSERIE AUTOMOBILE OBTENUES**
LAMINIERTES VERFORMBARES VERBUNDBLECH, VERFAHREN ZU SEINER HERSTELLUNG UND SO ERHALTENE KAROSSERIETEILE
LAMINATED COMPOSITE SHEET METAL CAPABLE OF BEING SHAPED, METHOD FOR MAKING SAME AND RESULTING MOTOR VEHICLE BODY PARTS

(30) Priorité: 18.02.2000 FR 0001988
(43) Date de publication de la demande: 11.12.2002
(73) Titulaire: USINOR, 92800 Puteaux (FR)
(72) Inventeur: SANADRES, Michel, F-60700 Pont Sainte Maxence (FR); CHARBONNET, Philippe, F-60300 Chamant (FR)
(74) Mandataire: Neyret, Daniel
(86) Numéro de dépôt international: FR0100447
(87) Numéro de publication internationale: WO01062490

(56) Documents cités:
- EP-A- 0 285 974
- US-A- 4 888 247
- US-A- 5 429 326

## Description

L'invention concerne une tôle composite stratifiée formable comprenant deux parements en tôles métalliques reliés par une couche à base de matériau polymère formant l'âme de la tôle composite ainsi qu'un procédé de fabrication de cette tôle et l'utilisation d'une tôle composite de ce type pour la réalisation de pièces en tôle formées, par exemple par emboutissage, pliage ou profilage, puis peintes.

D'une façon générale, l'avantage principal des tôles composites stratifiées par rapport à des tôles métalliques classiques réside dans le gain de poids auquel on parvient dans la réalisation de pièces ayant des spécifications de résistance mécanique prédéterminées ; cet avantage est très important dans les applications automobiles.

Le brevet US 3382136 (UNION CARBIDE) décrit des tôles composites du type précité dont l'âme est en matériau thermoplastique choisi dans le groupe comprenant les polyoléfines, les polyamides, les polyhydroxyéthers, les polycarbonates, les polymères vinyliques comme les polystyrènes, les polyacryliques, les polyméthacryliques ou les polychlorure de vinyle.

Ce document indique que de telles tôles composites sont beaucoup plus faciles à former par pliage que des plaques du même matériau plastique sans parements.

La demande de brevet EP 108710 (CIBA GEIGY) décrit également des tôles composites du type précité dont l'âme est en matériau thermoplastique choisi dans le groupe comprenant des mélanges de copolymères de propylène et d'éthylène et de copolymères de propylène et d'acide carboxylique insaturé, et, éventuellement des polyoléfines comme du polypropylène, du polyéthylène, du polybutylène, du polyisobutylène et/ou du polyméthylpentène ; le matériau thermoplastique peut contenir :
- des charges comme du talc ou du carbonate de calcium,
- des moyens de renforcement, comme des fibres de verre, des fibres de carbone ou des plaquettes de mica,
- des additifs classiques de matériau polymère, comme des agents stabilisants, des agents anti-oxydants.

La tôle composite décrite dans ce document est essentiellement destinée à des applications électriques et aucune opération de mise en forme de cette tôle n'est envisagée dans ce document.

Le brevet EP 184549 (SCHWEIZERISCHE ALUMINIUM) décrit également des tôles de ce type dont l'âme polymère est renforcée de fibres, comme des fibres de verre ou des fibres de carbone (page 2, lignes 57-60).

Le brevet US 3721597 (DOW) décrit des tôles composites dont l'âme est stratifiée en trois sous-couches : une sous-couche interne en matériau thermoplastique, comme un polyèthylène haute densité, située entre deux sous-couches externes en matériau thermoplastique thermo-adhésif, comme un co-polymère d'éthylène et d'acide acrylique. La température de fusion de la sous-couche interne doit être supérieure d'au moins 14°C à celle des sous-couches externes, pour éviter de fondre la sous-couche interne au moment de la co-lamination et de l'assemblage par thermocollage de la tôle composite stratifiée.

Selon ce document (col.6, ligne 63 à col.7, ligne 6 - exemple IV), la sous-couche interne peut également se présenter sous la forme d'une nappe textile, tissée ou non tissée, composée de fibres thermoplastiques comme du Nylon™ 66.

Le brevet PT 67259 (SOLVAY) décrit également des tôles de ce type (revendication 9) dont l'âme est constituée d'une feuille polyoléfine modifiée comprenant entre 10 et 90% de fibres cellulosiques. Selon ce document, avec ce type de fibres, on obtient une meilleure adhérence entre la feuille polyoléfine et les parements métalliques. De préférence, la matière polyoléfine se présente elle-même sous forme de fibres polyoléfines (revendication 7) de sorte que l'âme est alors une nappe textile intégrant des fibres polyoléfines et des fibres cellulosiques.

La demande de brevet JP 62-019456 (Matsushita Electric Works) décrit une tôle composite stratifiée du type précité dont l'âme présente au moins trois sous-couches : une sous-couche centrale à base de résine thermoplastique à haute tenue en température, intercalée entre deux sous-couches externes comprenant au moins une nappe textile pré-imprégnée. La tôle composite stratifiée décrite ici est destinée à des applications électroniques de supports de circuits imprimés et n'est pas adaptée à une opération de mise en forme.

Le brevet FR 1 579 770 (REICHOLD BECKACITE) décrit également une tôle composite stratifiée du type précité dont l'âme est formée d'une nappe tissée ou non tissée, par exemple de fibres de verre ou de fibres synthétiques, préimprégnée de résine polyester durcissable. La tôle obtenue est destinée à l'industrie du bâtiment et n'est pas adaptée à une opération de mise en forme.

La demande de brevet AU 8941110 (SYMONDS R AUSTRALIA) décrit des tôles du type précité dont l'âme est constituée de feuilles fibreuses poreuses préimprégnées d'une résine durcissable qui sert à conférer à l'âme ses propriétés cohésives et adhésives après application d'un cycle de chauffage. Les feuilles fibreuses ne sont pas des nappes textiles et la tôle obtenue n'est pas adaptée à une opération de mise en forme.

Dans le but d'améliorer la facilité de mise en forme par emboutissage des tôles du type précité, la demande de brevet EP 115103 (SUMITOMO) décrit également des tôles composites dont l'âme est également stratifiée en trois sous-couches dont les deux sous-couches externes présentent la particularité d'être ductiles et de ne pas présenter de limite élastique dans la courbe contrainte-déformation ; pour ces sous-couches externes de l'âme, on peut utiliser par exemple du caoutchouc nitrile, du polyéthylène chlorosulfoné, ou du polyuréthanne.

Les tôles composites stratifiées décrites dans les documents précédemment cités ne sont pas bien adaptées pour la réalisation de pièces formées et peintes de carrosserie de véhicule automobile, en particulier lorsque l'opération de mise en peinture de ces pièces comprend une étape de traitement thermique de séchage et/ou de cuisson de la peinture à des températures de l'ordre de 160°C.

Le procédé de fabrication d'une telle pièce comprend généralement les étapes suivantes :
- mise en forme, notamment par emboutissage, de la tôle composite stratifiée,
- application de peinture sur la surface de la pièce mise en forme,
- cuisson de la peinture appliquée sur la pièce dans des conditions thermiques adaptées pour obtenir la réticulation du liant de ladite peinture.

Un mode classique d'application d'au moins une des couches de peinture est l'électrodéposition dans un bain de cataphorèse. Or les peintures applicables par cataphorèse nécessitent généralement des cuissons à des températures supérieures à 160°C et pouvant atteindre 220°C. Cependant, à ces températures, le matériau polymère de l'âme de la tôle composite stratifiée commence généralement à fluer, voire à couler, de sorte que la pièce peinte obtenue après cuisson présente des défauts rédhibitoires pour son utilisation finale.

Dans les cas d'application de peinture en poudre ou en solution, le même problème de tenue en température se pose lorsque la cuisson dépasse 160°C.

Ainsi, la mauvaise tenue des tôles composites stratifiées du type précité à des cycles de chauffage lors desquels la température dépasse 160°C limite considérablement le développement de ces tôles dans le domaine automobile.

La demande de brevet JP 62 264941 (NIPPON STEEL) décrit une tôle composite stratifiée dont l'âme est à base de polypropylène contenant moins de 60% de charges fibreuses. Selon ce document, cette tôle est bien adaptée pour la fabrication de pièces peintes de carrosserie automobile, grâce à une bonne emboutissabilité et une résistance à la chaleur compatible avec le séchage après mise en peinture. Le matériau polymère de l'âme, chargé en fibres, présente un indice d'écoulement à l'état fondu de 0,01 à 0,6 g/10 min. à 190°C, mesuré selon la norme JIS 6758.

Pour améliorer la stabilité dimensionnelle et thermique des pièces formées à partir des tôles stratifiées de ce type, le brevet EP 547664 (HOOGOVENS) décrit un procédé de mise en forme dans lequel, avant emboutissage, on préchauffe la tôle composite entre la température ISO/A et la température de Vicat B du matériau de l'âme de la tôle.

L'invention a pour but de proposer une solution à la mauvaise tenue des pièces en tôles composites stratifiées du type précité à des cycles de chauffage lors desquels la température dépasse 160°C.

A cet effet, l'invention a pour objet une tôle composite stratifiée formable comprenant deux parements en tôles métalliques reliés par une âme formée par au moins une couche à base de matériaux polymères comprenant au moins une nappe textile continue de fibres polymères imprégnée d'au moins un matériau polymère d'imprégnation de la nappe et d'adhérence avec lesdits parements, caractérisé en ce que :
- lesdites fibres polymères sont thermoplastiques,
- ledit matériau polymère d'imprégnation et d'adhérence est thermodurci.

On entend par nappe textile continue, une nappe tissée ou non tissée s'étendant sur toute la surface de l'âme ; de préférence, la nappe est non tissée pour éviter tout risque de marquage par transfert de texture sur les parements lors de opérations de mise en forme.

De préférence :
- la nappe textile continue présente un allongement à la rupture en traction supérieur à celui des parements en tôles métalliques, de préférence supérieure à 80%,
- la nappe textile est aiguilletée,
- le poids du matériau thermodurci d'imprégnation représente avantageusement entre 10 et 90%, en particulier entre 30% et 70% du poids total de l'âme.
- l'âme est d'épaisseur homogène et supérieure à 0,1 mm et de masse volumique supérieure à 0,5 kg/dm³, ce qui permet de la distinguer nettement des panneaux isolants pour bâtiment, généralement à âme en mousse polyuréthanne,
- les parements sont en tôle d'acier.

Grâce à la nappe textile continue et au matériau d'imprégnation thermodurci, on améliore très sensiblement la tenue en température de la tôle composite. Grâce au caractère thermoplastique des fibres de cette nappe, la tôle composite est facile à mettre en forme, par exemple par pliage, emboutissage ou profilage. Grâce aux parements en métal et à la faible porosité de l'âme, la tôle composite présente de bonnes propriétés mécaniques, notamment pour servir à fabriquer des pièces de carrosserie. Grâce à l'importante épaisseur que l'on peut donner à l'âme, les pièces de carrosserie obtenues peuvent être plus légères, à propriétés mécaniques équivalentes, que des pièces de carrosserie classiques en tôle d'acier.

L'invention a également pour objet un procédé d'utilisation de la tôle selon l'invention pour fabriquer des pièces pour carrosseries automobiles. Ce procédé comprend les étapes suivantes :
- mise en forme de pièce en tôle composite stratifiée,
- application de peinture sur la surface de ia pièce mise en forme,
- cuisson de la peinture appliquée sur la pièce dans des conditions thermiques adaptées pour obtenir la réticulation du liant de ladite peinture.

La mise en forme est réalisée de préférence par emboutissage, pliage ou profilage. La tôle selon l'invention résiste à des conditions sévères d'emboutissage et/ou de pliage et/ou de profilage.

L'application de peinture peut être réalisée par exemple par cataphorèse, par projection de poudre, ou par enduction d'une peinture liquide en solution ou d'une nappe polymère fondue. La tôle selon l'invention peut être traitée à des températures supérieures à 160°C, de préférence supérieures à 180°C, températures qu'on atteint généralement lors de la cuisson de la peinture.

L'invention sera mieux comprise à la lecture de la description qui va suivre, donnée à titre d'exemple non limitatif.

On va d'abord décrire la tôle composite stratifiée formable selon l'invention.

Chaque parement de la tôle composite selon l'invention est donc constitué d'une tôle métallique d'épaisseur avantageusement comprise entre 0,1 mm et 1,5 mm, de préférence comprise entre 0,2 mm et 0,5 mm, par exemple de l'ordre de 0,25 mm. De préférence, on choisit des tôles en acier qui présentent de meilleures propriétés mécaniques que des tôles d'aluminium, et sont plus facilement emboutissables. Ces tôles d'acier peuvent être nues, revêtues d'un alliage métallique, traitées avec un composé minéral par exemple par chromatation ou par phosphatation, éventuellement huilées ou revêtues d'un matériau organique comme un revêtement organique mince, une couche de peinture primaire, voire une laque de finition.

On utilise de préférence une nappe textile aiguilletée qui désigne une nappe du type de celle qu'on obtient par cardage de fibres, calandrage, puis aiguilletage. On entend par aiguilletage une opération d'encastrement de fibres, par exemple par des moyens mécaniques ou hydrauliques ; cette nappe fait donc partie des textiles non tissés.

Les nappes textiles utilisables pour la mise en oeuvre de l'invention peuvent également intégrer des composés connus, sous forme de poudres ou de fibres, adaptés pour améliorer leur stabilité ou, par exemple, leur conductivité électrique.

Pour la mise en oeuvre de l'invention, il pourra s'avérer avantageux d'utiliser une nappe présentant une masse surfacique comprise entre 100 g/m² et 1500 g/m², de préférence entre 250 g/m² et 700 g/m².

Les matériaux thermoplastiques des fibres utilisées pour cette nappe sont choisis de préférence dans le groupe comprenant les polyoléfines, tels que le polypropylène ou le polyéthylène, les polyesters, les polyamides, les polycarbonates, les polyimides, les polyacryliques, les polyméthacryliques ou les polychlorures de vinyle. Ces matériaux thermoplastiques peuvent intégrer des additifs classiques, comme des charges minérales ou des agents plastifiants.

A titre d'exemples de nappes textiles aiguilletées, on peut citer les produits commerciaux BESTER 30, TIMEX 40, TIMEX 60, ou DUTEX 4140 THU de la Société THARREAU et les produits commerciaux PR200 et PR300 de la Société SOMMER ; ces nappes textiles en fibres thermoplastiques sont couramment utilisées pour le drainage des sols en génie civil.

Le matériau polymère d'imprégnation et d'adhérence qui est thermodurci, est préparé à partir d'une ou plusieurs résines thermodurcissables. Dans le cadre de la présente invention, on entend par résine thermodurcissable, une résine ou un composé dont le poids moléculaire peut augmenter et qui peut réticuler sous l'effet de la chaleur ou d'un autre facteur. Parmi ces autres facteurs, on peut citer, à titre non limitatif, l'action de l'eau, l'ajout de catalyseurs, l'irradiation par faisceau d'électrons ou par UV, ou bien encore le mélange avec un durcisseur, ainsi que tout procédé adapté. De même, le terme thermodurci désigne classiquement une résine thermodurcissable que l'on a réticulé sans avoir nécessairement du la chauffer.

Cette résine thermodurcissable est de préférence choisie dans le groupe comprenant les résines époxy, les résines phénoliques comme les résines nitriles-phénoliques et les résines vinyle-phénoliques, les résines polyuréthanes, les résines formaldéhyde-cétone, les résines urée, les résines mélamines, les résines aniline, les résines sulfonamide, les résines alkydes, les résines de polyesters insaturés, les résines polybutadiènes, les résines bismaléimides, les résines de polyvinylbutyral, les résines isocyanates et les résines polyimides.

De préférence, le matériau thermoplastique des fibres est à base de polypropylène et le matériau polymère d'imprégnation et d'adhérence est à base de résine époxy.

Cette résine thermodurcissable peut contenir en son sein un certain nombre de composés chimiques et/ou métalliques et/ou minéraux, afin d'améliorer les caractéristiques de mise en oeuvre ou d'emploi de la tôle selon l'invention :
- les composés métalliques, tels des charges de zinc, de nickel ou de phosphure de fer, permettent, notamment, d'assurer la conductivité électrique entre les deux tôles métalliques et de favoriser ainsi les opérations de soudage par points et de mise en peinture faisant suite aux opérations de formage.
- les composés minéraux, tels des charges de talc, de craie, de chaux, de silice permettent notamment d'améliorer la tenue en température de la résine et par la-même de la nappe textile lors des opérations de mise en peinture pouvant succéder aux opérations de formage.
- les composés chimiques, tels des charges élastomériques et/ou thermoplastiques (type polypropylène, polyéthylène, polyamide...) permettent de rendre plus ductile et tenace la résine thermodurcissable et par la-même d'améliorer les performances de formage et les propriétés mécaniques de la tôle composite selon l'invention.

D'une manière connue en soi, on choisit la résine thermodurcissable pour obtenir à la fois une bonne adhérence aux parements et une bonne imprégnation de la nappe textile. Selon le procédé d'imprégnation utilisé, cette résine durcissable peut se présenter sous forme pâteuse, sous forme liquide fondue ou liquide en solution, ou sous forme de poudre.

Dans certains cas, la tôle selon l'invention peut comporter plusieurs types de résines thermodurcissables différentes, en termes de chimie, de forme, etc... Ainsi, on pourra utiliser une première résine pour permettre une bonne imprégnation à coeur du textile et une deuxième résine pour améliorer les propriétés d'adhérence. On peut également envisager de réaliser un pré-mélange de ces deux résines avant d'imprégner la nappe textile.

L'âme ainsi formée par au moins une couche comprenant au moins une nappe textile continue imprégnée du matériau polymère thermodurci présente une épaisseur généralement comprise entre 0,1 mm et 4 mm, de préférence entre 0,2 mm et 2 mm pour la réalisation de pièces de carrosserie automobile.

Dans cette âme, le poids du matériau thermodurci d'imprégnation représente avantageusement entre 10% et 90%, de préférence entre 30% et 70%, du poids total de l'âme.

La tôle composite stratifiée formable selon l'invention pourra être fabriquée par tout procédé adapté. Ainsi, on pourra procéder en réalisant les étapes suivantes :
- on imprègne une nappe textile à l'aide d'une ou de plusieurs résines thermodurcissables, chaque résine étant appliquée de façon successive ou bien en une seule fois au moyen d'un mélange de résines préparé préalablement,
- on applique une tôle métallique de chaque côté de la nappe pré-imprégnée,
- on applique, à la nappe ainsi munie de ses deux parements de tôle, un traitement de durcissement adapté à la réticulation de la résine thermodurcissable ou des résines thermodurcissables pour former le matériau thermodurci ; ce traitement peut être thermique ou autre.

Cependant, les présents inventeurs ont constaté que l'on pouvait procéder différemment de façon avantageuse. Ainsi, un autre objet de l'invention est constitué par un procédé de fabrication d'une tôle composite stratifiée formable selon l'invention comprenant :
- un pré-encollage d'une face d'au moins un parement en tôle métallique à l'aide d'une matière comprenant au moins une résine thermodurcissable, puis
- l'application de la face pré-encollée de ladite tôle métallique sur une nappe textile éventuellement pré-imprégnée à l'aide d'une ou plusieurs résines thermodurcissables, puis
- l'application d'un second parement en tôle métallique, éventuellement pré-encollé à l'aide d'une matière comprenant au moins une résine thermodurcissable, sur l'autre face de ladite nappe textile, puis
- un traitement de durcissement de la ou des résines thermodurcissables utilisées, adapté à la réticulation de la résine thermodurcissable ou des résines thermodurcissables pour former le matériau thermodurci.

Grâce à cette étape de pré-encollage, on peut optimiser les propriétés d'adhérence des différents composants de la tôle selon l'invention. En effet, lors des opérations d'accostage et de collage, ce ou ces résines thermodurcissables appliquées préalablement sur les tôles métalliques permettront non seulement d'assurer les propriétés d'adhérence de la nappe textile mais diffuseront au sein de la nappe textile et en réaliseront ainsi une imprégnation plus ou moins importante. Dans certains cas, cette opération de pré-encollage peut se substituer complètement à l'opération antérieure d'imprégnation de la nappe textile qu'on utilisera donc à l'état non imprégné.

Le pré-encollage pourra consister en l'enduction d'une résine thermodurcissable à l'état visqueux qui imprègnera ensuite la nappe textile lors de l'application du parement sur celle-ci.

On pourra également encoller un parement avec un mélange comprenant au moins une résine thermodurcissable et au moins une matière thermoplastique. Ce mode de réalisation présente l'avantage qu'après encollage du parement, on peut procéder à son séchage ce qui fait réticuler la matière thermodurcissable et solidifier la matière thermoplastique. Le parement ainsi encollé peut ensuite être stocké puis utilisé lorsque cela est nécessaire. Avant de l'appliquer sur la nappe textile, il suffira de le chauffer pour fondre la matière thermoplastique ce qui permettre d'assurer l'adhésion du parement et de la nappe.

On trouvera ci-dessous une description plus précise des étapes pouvant être mises en oeuvre dans le procédé selon l'invention ou dans un autre procédé permettant de fabriquer la tôle selon l'invention.

### Etape de pré-imprégnation de la nappe textile thermoplastique par une ou plusieurs résines thermodurcissables

- Déroulage de bobinots de nappe textile ;
- Imprégnation de cette nappe au moyen d'un dispositif adapté à cet effet par exemple par la mise en oeuvre de rouleaux enducteurs, de procédés de pulvérisation ou d'aspersion ou d'immersion ou par gravité ;
- dans le cas de l'emploi de résines liquides en solution, chauffage de la nappe pré-imprégnée de manière à évacuer les solvants ou l'eau ; ce chauffage peut concourir à la stabilisation dimensionnelle de la nappe. Dans certains cas, pour faciliter l'opération de collage, cette nappe pré-imprégnée pourra être calandrée avant son séchage complet ce qui permet de réduire son épaisseur avant de mettre en oeuvre l'étape suivante.
- Enroulage sous forme de bobinots de la nappe ainsi pré-imprégnée.

### Etape d'application des parements sur les deux faces de la nappe pré-imprégnée ou non.

### A- Exemple d'un procédé discontinu :

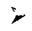 Déroulage et découpe des bobines de tôles métalliques en flans ;
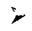 Pré-encollage éventuel, avec une ou plusieurs résines thermodurcissables, de la face de la tôle qu'on mettra en contact avec la nappe textile. Ce pré-encollage est réalisé par des dispositifs adaptés comme des dispositifs de roll-coat (rouleau enducteur), de pulvérisation, de racle, d'enduction de cordons, etc... A titre d'exemple, les quantités de résines durcissables appliquées peuvent varier entre 10 et 400 g/m² et de préférence entre 50 et 200 g/m² ;
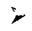 Déroulage et découpe des bobinots des âmes textiles en feuilles pré-imprégnées ou non ;
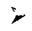 Positionnement des feuilles d'âmes textiles entre les deux flans de tôles métalliques pré-encollés ou non ;
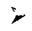 Mise sous pression de l'ensemble et application des conditions adaptées pour durcir la ou les résines thermodurcissables d'imprégnation et d'adhérence et éventuellement pour qu'elles imprègnent la nappe textile :
   - dans le cas d'un durcissement à température ambiante, les durées de stockage sous pression sont généralement comprises entre 12 heures et 7 jours,
   - dans le cas d'un durcissement à chaud, les cycles de chauffage présentent généralement des températures maximales comprises entre 60 et 200°C et des durées allant de 10 secondes à 60 minutes ; on utilise alors une presse chauffante,
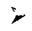 Refroidissement des tôles composites stratifiées formables ainsi réalisées.

### B- Exemple d'un procédé continu :

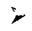 Déroulage d'un bobinot d'âmes textiles pré-imprégnées ou non entre deux bobines de tôles métalliques, la vitesse de déroulage étant généralement comprise entre 1 et 20 m/min.
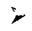 Déroulage des bobines de tôles métalliques en flans éventuellement suivi d'un pré-encollage de la face des flans q'on mettra en contact avec la nappe textile et ce avec une ou plusieurs résines thermodurcissables. Ce pré-encollage est réalisé par des dispositifs adaptés comme des dispositifs de roll-coat (rouleau enducteur), de pulvérisation, de racle, d'enduction de cordons,...A titre d'exemple, les quantités de résines thermodurcissables appliquées peuvent varier entre 10 et 400 g/m² et de préférence entre 50 et 200 g/m² ;
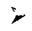 Calandrage à chaud de l'âme entre les deux tôles métalliques : température généralement comprise entre 150 et 200°C, pendant des durées allant de 3 à 300 secondes et de préférence entre 20 et 60 secondes ;
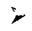 Refroidissement et enroulage en bobinot de la bande de tôle composite stratifiée formable obtenue.

Les principaux avantages de la tôle composite stratifiée formable obtenue sont les suivants :
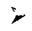 L'âme textile thermoplastique éventuellement aiguilletée apporte :
   - des propriétés de ductilité et de souplesse nécessaires aux opérations de mise en forme, par exemple de pliage, de sertissage, de profilage et notamment d'emboutissage ;
   - une bonne aptitude à l'imprégnation avec une résine organique, comme le ou les matériaux adhésifs à base de polymères thermodurcissables, car la résine peut facilement diffuser et pénétrer entre les fibres de ce textile ;
   - des avantages économiques.
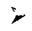 Le ou les matériaux adhésifs à base de polymère thermodurcissable apportent :
   - une bonne adhésion directe de l'âme sur les tôles métalliques, notamment en acier, quel que soit leur état de surface (dégraissées, chromatées, huilées, prépeints),
   - une bonne durabilité des propriétés adhésives et cohésives de l'âme vis à vis des agressions de l'environnement extérieur,
   - de bonnes performances mécaniques en terme de rigidité des tôles et des pièces réalisées par mise en forme de ces tôles,
   - une bonne tenue aux cycles de chauffage des opérations de mise en peinture de la tôle.

En effet, la ou les résines thermodurcissables diffusent au sein des fibres thermoplastiques entremêlées lors de l'étape d'imprégnation ou lors du traitement thermique final, et s'y fixent par des phénomènes d'ancrage mécaniques et/ou l'établissement de liaisons physiques et/ou chimiques.

Lors du traitement de réticulation de ces résines, elles créent, en durcissant, un réseau polymérique thermiquement stable qui emprisonne les fibres thermoplastiques, de manière à faire disparaître tous les problèmes liés au ramollissement de ces fibres thermoplastiques lors de l'application de cycles de chauffage ultérieurs, tels ceux liés aux opérations de mise en peinture des tôles composites déjà cités.
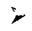 L'association de l'âme textile thermoplastique et de l'adhésif thermodurcissable ou des adhésifs thermodurcissables apporte :
   - de bonnes performances mécaniques des pièces notamment en fatigue et au choc,
   - une bonne résistance de l'âme lors de la mise en forme au niveau des singularités géométriques.

Ceci incombe à l'association des caractéristiques mécaniques intrinsèques d'un matériau polymère thermoplastique et de celles de matériaux polymères thermodurcissables ; globalement, cette association permet d'obtenir une tôle composite à la fois ductile et tenace.

En résumé, la tôle composite stratifiée formable selon l'invention présente à la fois une facilité de mise en forme et une bonne tenue en température, compatible avec les traitements thermiques qu'on applique lors des opérations de mise en peinture de pièces formées.

D'autres avantages de la tôle composite stratifiée formable selon l'invention apparaîtront à la lecture des exemples présentés ci-après à titre non limitatif.

### MATÉRIELS :

### 1) Tôle métallique pour les parements :

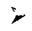 tôles d'acier galvanisés dégraissées, d'épaisseur 0,25 mm.
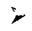 caractéristiques mécaniques des tôles : du type ES, présentant une limite élastique de 180 MPa.
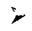 caractéristiques du revêtement galvanisé : 10 µm par face.

### 2) Nappe textile pour l'âme :

Deux nappes textiles aiguilletées ont été utilisées : l'une fournie par la société SOMMER (référence PR300), l'autre fournie par la société THARREAU (référence BESTER 30) ; ces deux nappes sont réalisées à partir de fibres en polypropylène.

L'épaisseur des deux nappes avant imprégnation est :
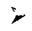 de 3 mm pour la nappe PR300,
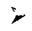 de 2.7 mm pour la nappe BESTER30.

La masse surfacique de ces deux nappes est de 300 g/m² ; l'allongement à la rupture est compris entre 80% et 90%.

### 3) Résine thermodurcissable :

On utilise la résine de type « époxy assoupli monocomposant », référencée 1493 de la société GURIT.
- Cette résine est utilisée pour des applications de collage structural de tôles métalliques dans le secteur automobile.
- Les principales caractéristiques de cette résine sont, après durcissement complet, c'est à dire à l'état thermodurci :
   - Module d'Young (en traction) : de l'ordre de 2000 MPa
   - Allongement à la rupture en traction : de l'ordre de 14%
   - Température de transition vitreuse : de l'ordre de 90°C
   - Pourcentage de charges minérales : inférieur à 10% (en poids).

### Exemple 1 :

Cet exemple a pour but d'illustrer un mode de réalisation d'une tôle composite stratifiée formable selon l'invention, à partir des composants décrits au paragraphe MATÉRIELS ci-dessus.

### Etape d'imprégnation

On prépare une solution de résine liquide d'imprégnation, en diluant, à chaud et sous agitation, de la résine 1493 dans de l'acétone.

Conditions de dilution : proportion résine/acétone : 5/3 - température : 35 à 40°C - durée d'agitation : entre 3 et 4 heures.

On trempe ensuite la nappe textile (voir § MATÉRIELS, point 2) dans cette solution, puis on calandre la nappe imprégnée obtenue entre deux rouleaux pour essorer cette nappe et éliminer l'excès de solution d'imprégnation on sèche ensuite la nappe essorée entre 40 et 50°C pendant 15 à 30 minutes jusqu'à évaporation complète du solvant.

Les conditions d'essorage sont adaptées pour obtenir un ratio entre le poids de nappe textile imprégnée et le poids de résine 1493 d'imprégnation compris entre 2/3 et 1.

### Etape de collage et d'assemblage de la tôle composite.

A l'aide d'une presse chauffante, on procède aux opérations suivantes :
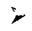 Accostage des tôles de parements de part et d'autre de l'âme textile pré-imprégnée,
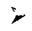 Introduction de l'ensemble entre deux plateaux chauffants,
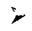 Application d'un cycle de chauffage constitué d'un palier de 1 heure à 160°C ; application d'une simple pression de contact (inférieure à 6 10⁺⁵ Pa), adaptée pour obtenir une tôle dont l'âme présente une épaisseur comprise entre 0,9 et 1,1 mm.

### Exemple comparatif 1 :

Cet exemple a pour but de préparer des tôles composites stratifiées selon l'art antérieur, dont l'âme est en matériau polymère thermoplastique ou thermodur, est dépourvue de nappe textile.

### Cas du polypropylène (PP)

La tôle utilisée pour les parements est identique à celle décrite au paragraphe MATÉRIELS, à la différence près qu'elle est pré-encollée sur la face destinée à venir au contact de l'âme d'une couche d'adhésif d'épaisseur 15 µm à base d'un mélange de résine époxy et de polypropylène greffé.

Pour l'âme on utilise une feuille homogène à base de polypropylène d'épaisseur de l'ordre de 1 mm.

On assemble la tôle composite stratifiée et on la place dans une presse chauffante sous simple pression de contact ; on applique un cycle de chauffage comportant un palier de 2 minutes à 200°C, puis on laisse refroidir en maintenant à température ambiante pendant au moins 24 heures.

### Cas du polyéthylène téréphtalate (PET)

La tôle utilisée pour les parements est identique à celle décrite au paragraphe MATÉRIELS.

Pour l'âme on utilise deux feuilles superposées homogènes à base de polyéthylène téréphtalate bi-orienté (PET), chacune d'épaisseur de l'ordre de 0,5 mm.

Comme adhésif entre les deux feuilles et aux interfaces feuille-parement, on utilise la résine durcissable décrite au paragraphe MATÉRIELS.

Pour fabriquer la tôle composite stratifiée :
- on dilue la résine thermodurcissable comme indiqué à l'exemple 1, de manière à obtenir une solution liquide de cette résine, ou solution de collage ;
- à l'aide d'une barre de revêtement (« barre coater » en langue anglaise), on applique une couche de la solution de collage sur une face de chaque feuille de PET, on sèche pendant 15 à 30 minutes entre 40 et 50°C , et on applique les deux faces ainsi encollées l'une contre l'autre;
- on applique ensuite une couche de la solution de collage sur une face de chaque tôle métallique, et on sèche également pendant 15 à 30 minutes entre 40 et 50°C ;
- on assemble la tôle composite stratifiée et on la place dans une presse chauffante sous simple pression de contact ; on applique un cycle de chauffage comportant un palier de 1 heure à 160°C, puis on laisse refroidir en maintenant à température ambiante pendant au moins 24 heures.

Toutes les opérations d'application de solution de collage sont adaptées pour obtenir un joint homogène de collage, qui après séchage et réticulation, présente une épaisseur uniforme de l'ordre de 50 µm.

### Cas du polyuréthanne (PU)

La tôle utilisée pour les parements est identique à celle décrite au paragraphe MATÉRIELS.

Pour l'âme on utilise un matériau adhésif à base de polyuréthanne référencé PLIOGRIP 7779 de la Société ASHLAND ; pour mettre en oeuvre cet adhésif, on utilise deux produits livrés séparément, la résine et le durcisseur ; la réticulation et le durcissement du mélange des deux produits ont lieu à température ambiante et peuvent être accélérés par chauffage.

Après durcissement, les principales caractéristiques du matériau thermodurci sont :
- module d'Young en traction de l'ordre de 500 MPa,
- allongement à la rupture en traction de l'ordre de 75%,
- température de transition vitreuse de l'ordre de -30°C.

Pour fabriquer la tôle composite stratifiée :
- à l'aide d'un pistolet, on applique sur une face d'une des tôles de parement des cordons du matériau adhésif de diamètre 6 mm, en les disposant parallèlement les uns aux autres et en les espaçant de 6 mm, puis on dispose sur cette face des billes de verre de calibrage de diamètre 1 mm environ. - on applique l'autre tôle de parement sur la face ainsi encollée et on presse à froid entre deux plateaux l'assemblage obtenu à une pression adaptée pour obtenir l'étalement des cordons de matériau adhésif jusqu'à obtenir une âme homogène, sans porosités ni cavités,
- en maintenant une simple pression de contact entre les plateaux, on applique enfin un cycle de chauffage comportant un palier de 2 minutes à 200°C, puis on laisse refroidir en maintenant à température ambiante pendant au moins 24 heures.

### Exemple 2

Cet exemple a pour but d'illustrer la facilité de mise en forme par emboutissage de pièces obtenues à partir de tôles composites selon l'invention.

Pour les essais, on prépare des flans de tôle composite stratifiée de diamètre externe de 150 mm.

L'essai mis en oeuvre pour évaluer l'emboutissablité consiste à emboutir des flans de tôle composite de forme circulaire pour lui donner la forme d'un godet à fond hémisphérique, et à déterminer la profondeur maximale de pénétration du poinçon d'emboutissage au delà de laquelle on assisterait à un endommagement de la tôle, par rupture des parements ou par endommagement de l'âme.

Pour les essais, on utilise une presse de laboratoire comprenant une matrice et un serre-flan, au travers desquels coulisse un poinçon à tête hémisphérique :
- Diamètre de la matrice d'emboutissage : 84,75 mm (avec jonc d'arrêt)
- Diamètre du poinçon : 75 mm
- Rayon de courbure du poinçon au sommet : 37,5 mm

Pour les essais d'emboutissage des flans, les conditions appliquées sont les suivantes :
- Effort de Serre- Flan : 80 kN ; cet effort de serre-flan permet de bloquer complètement les flans et ainsi de se placer dans des conditions d'expansion pure.
- Effort d'emboutissage : variable, entre 30 et 35 kN

On procède à plusieurs séries d'essais pour chaque type de flan de tôle ; on retient la valeur moyenne des valeurs de profondeur maximale d'emboutissage obtenues ; les résultats moyens obtenus pour la tôle métallique seule (cf. MATÉRIELS, point 1), pour la tôle composite stratifiée selon l'invention de l'exemple 1, et pour les tôles selon l'art antérieur de l'exemple comparatif 1 sont reportés au tableau I.

**Tableau I -**

| Aptitude à la mise en forme par emboutissage | | | | | |
|---|---|---|---|---|---|
| Type de tôle composite | Tôle seule | exemple 1 (invention) | cas PP | cas PET | cas PU |
| Profondeur maximale d'emboutissage (mm) | 32 | 31 | 31 | 26 | 20 |

On voit donc que la tôle selon l'invention peut être aussi facilement mise en forme que les tôles métalliques d'acier et que les tôles composites stratifiées de l'art antérieur qui présentent une âme homogène en polypropylène.

### Exemple 3

Cet exemple a pour but d'illustrer la tenue en température des pièces embouties obtenues à partir de tôles composites selon l'invention.

Les éprouvettes embouties de l'exemple 2 sont placées pendant une heure dans une étuve à 200°C ; ce traitement correspond à des conditions sévères de cuisson de peinture appliquée sur des pièces de carrosserie automobile.

On observe l'aspect de ces éprouvettes après séjour en étuve.

Le résultat de ces observations met en évidence :
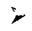 Une très bonne tenue des éprouvettes embouties réalisée à partir des tôles selon l'invention de l'exemple 1 ou à partir des tôles correspondant au cas « PU » de l'exemple comparatif 1 : pas de désolidarisation des parements, pas de marquages additionnels en surface de parements, pas de coulures.
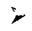 Une mauvaise tenue des éprouvettes embouties à partir des tôles correspondant aux cas « PP », « PET » de l'exemple comparatif 1 :
   - cas PP : mauvais comportement se traduisant principalement par des coulures de polymère polypropylène à l'extérieur des parements, notamment sur les bords des pièces,
   - cas PET : mauvais comportement se traduisant par la désolidarisation complète des deux parements au bout de 30 minutes dans l'étuve ; l'âme en PET s'est décollée et a expulsé les deux parements métalliques pour retrouver sa forme plane initiale à cause des contraintes internes générées au cours de l'emboutissage à froid qui ne sont pas relaxées.

En conclusion des exemples 2 et 3, seule la tôle composite stratifiée selon l'invention présente à la fois une grande facilité de mise en forme, même dans des conditions sévères de déformation, et une bonne tenue en température, même après mise en forme et à des températures dépassant 160°C.

## Revendications

1. Tôle composite stratifiée formable comprenant deux parements en tôles métalliques reliés par une âme formée par au moins une couche à base de matériaux polymères comprenant au moins une nappe textile continue de fibres polymères imprégnée d'au moins un matériau polymère d'imprégnation de la nappe et d'adhérence avec lesdits parements,
**caractérisé en ce que** :
- lesdites fibres polymères sont thermoplastiques,
- ledit matériau polymère d'imprégnation et d'adhérence est thermodurci.

2. Tôle selon la revendication 1, **caractérisée en ce que** la nappe textile continue présente un allongement à la rupture en traction supérieur à celui des parements en tôles métalliques.

3. Tôle selon la revendication 1 ou 2, **caractérisée en ce que** la nappe textile continue est aiguilletée.

4. Tôle selon l'une quelconque des revendications 1 à 3, **caractérisée en ce que** ladite âme est d'épaisseur homogène et supérieure à 0,1 mm et de masse volumique supérieure à 0,5 kg/dm³.

5. Tôle selon l'une quelconque des revendications 1 à 4 **caractérisé en ce que** le poids du matériau thermodurci d'imprégnation représente entre 30% et 70% du poids total de l'âme.

6. Tôle selon l'une quelconque des revendications 1 à 5 **caractérisée en ce que** lesdits parements sont des tôles d'acier.

7. Tôle selon l'une quelconque des revendications 1 à 6 **caractérisée en ce que** le matériau thermoplastique desdites fibres est choisi dans le groupe comprenant les polyoléfines, les polyesters, les polyamides, les polycarbonates, les polyimides, les polyacryliques, les polyméthacryliques ou les polychlorures de vinyle.

8. Tôle selon l'une quelconque des revendications 1 à 7 **caractérisée en ce que** le matériau polymère d'imprégnation et d'adhérence est choisi dans le groupe comprenant les résines époxy, les résines phénoliques, les résines polyuréthanes, les résines formaldehyde-cétone, les résines urée, les résines mélamines, les résines aniline, les résines sulfonamide, les résines alkydes, les résines de polyesters insaturés, les résines polybutadiènes, les résines bismaléimides, les résines de polyvinylbutyral, les résines isocyanates et les résines polyimides.

9. Tôle selon les revendications 7 et 8, **caractérisée en ce que** le matériau thermoplastique desdites fibres est à base de polypropylène et **en ce que** le matériau polymère d'imprégnation et d'adhérence est à base de résine époxy.

10. Procédé de fabrication d'une tôle composite stratifiée formable selon l'une quelconque des revendications 1 à 9, **caractérisé en ce qu'**il comprend :
- un pré-encollage d'une face d'au moins un parement en tôle métallique à l'aide d'une matière comprenant au moins une résine thermodurcissable, puis
- l'application de la face pré-encollée de ladite tôle métallique sur une nappe textile éventuellement pré-imprégnée à l'aide d'une ou plusieurs résines thermodurcissables, puis
- l'application d'un second parement en tôle métallique, éventuellement pré-encollé à l'aide d'une matière comprenant au moins une résine thermodurcissable, sur l'autre face de ladite nappe textile, puis
- un traitement de durcissement de la ou des résines thermodurcissables utilisées.

11. Utilisation de la tôle selon les revendications 1 à 9, pour la réalisation de pièces de carrosserie automobile mises en forme, peintes, puis traitées thermiquement.

12. Pièce obtenue selon la revendication 11 **caractérisée en ce qu'**elle est mise en forme par emboutissage.

13. Pièce obtenue selon la revendication 11 **caractérisée en ce qu'**elle est mise en forme par pliage.

14. Pièce obtenue selon la revendication 11 **caractérisée en ce qu'**elle est mise en forme par profilage.

15. Pièce obtenue selon l'une quelconque des revendications 11 à 14, **caractérisée en ce qu'**elle est traitée thermiquement à plus de 160°C.

16. Pièce selon la revendication 15, **caractérisée en ce que**, en outre, elle est traitée thermiquement à plus de 180°C.

## Patentansprüche

1. Formbares und in Lagen angeordnetes Verbundblech, das zwei Außenlagen aus Metallblechen umfaßt, die durch einen Kern verbunden sind, der durch wenigstens eine Schicht auf der Basis von Polymermaterialien gebildet ist, die wenigstens eine ununterbrochene Gewebelage aus Polymerfasem umfassen, die mit wenigstens einem Polymermaterial zur Imprägnierung der Lage und zur Haftung an den Außenlagen imprägniert ist, **dadurch gekennzeichnet, daß**:
- die Polymerfasern thermoplastisch sind und
- das Imprägnierungs- und Haftungs-Polymermaterial wärmegehärtet ist.

2. Blech nach Anspruch 1, **dadurch gekennzeichnet, daß** die ununterbrochene Gewebelage beim Reißen durch Zug eine Dehnung besitzt, die größer als jene der Außenlagen aus Metallblechen ist.

3. Blech nach Anspruch 1 oder 2, **dadurch gekennzeichnet, daß** die ununterbrochene Gewebelage genadelt ist.

4. Blech nach einem der Ansprüche 1 bis 3, **dadurch gekennzeichnet, daß** der Kern eine gleichmäßige Dicke besitzt, die größer als 0,1 mm ist, und eine Dichte besitzt, die größer als 0,5 kg/dm³ ist.

5. Blech nach einem der Ansprüche 1 bis 4, **dadurch gekennzeichnet, daß** das Gewicht des wärmegehärteten Imprägnierungsmaterials im Bereich von 30 % bis 70 % des Gesamtgewichts des Kerns liegt.

6. Blech nach einem der Ansprüche 1 bis 5, **dadurch gekennzeichnet, daß** die Außenlagen Stahlbleche sind.

7. Blech nach einem der Ansprüche 1 bis 6, **dadurch gekennzeichnet, daß** das thermoplastische Material der Fasern aus der Gruppe gewählt ist, die Polyolefine, Polyester, Polyamide, Polycarbonate, Polyimide, Polyacryle, Polymetacryle und Polyvinylchloride umfaßt.

8. Blech nach einem der Ansprüche 1 bis 7, **dadurch gekennzeichnet, daß** das Imprägnierungs- und Haftungs-Polymermaterial aus der Gruppe gewählt ist, die Epoxidharze, Phenolharze, Polyurethanharze, Formaldeyhd-Keton-Harze, Amidharze, Melaminharze, Anilinharze, Sulfonamidharze, Alkydharze, ungesättigte Polyesterharze, Polybutadienharze, Bismaleimidharze, Polyvinylbuthyralharze, Isocyanatharze und Polyimidharze umfaßt.

9. Blech nach den Ansprüchen 7 und 8, **dadurch gekennzeichnet, daß** das thermoplastische Material der Fasern auf Polypropylen basiert und daß das Imprägnierungs- und Haftungs-Polymermaterial auf Epoxidharz basiert.

10. Verfahren zur Herstellung eines formbaren und in Lagen angeordneten Verbundblechs nach einem der Ansprüche 1 bis 9, **dadurch gekennzeichnet, daß** es umfaßt:
- Vorschlichten einer Fläche wenigstens einer Außenlage aus Metallblech mit Hilfe einer Substanz, die wenigstens ein wärmehärtbares Harz enthält, dann
- Aufbringen der vorgeschlichteten Fläche des Metallblechs auf eine Gewebelage, die eventuell mit Hilfe eines oder mehrerer wärmehärtbarer Harze vorimprägniert ist, dann
- Aufbringen einer zweiten Außenlage aus Metallblech, die eventuell mit Hilfe einer Substanz, die wenigstens ein wärmehärtbares Harz enthält, vorgeschlichtet ist, auf die andere Fläche der Gewebelage, dann
- Ausführen einer Härtungsbehandlung des oder der verwendeten wärmehärtbaren Harze.

11. Verwendung des Blechs nach den Ansprüchen 1 bis 9 für die Herstellung von Kraftfahrzeugkarosserieteilen, die geformt, gestrichen und dann wärmebehandelt werden.

12. Teil, das nach Anspruch 11 erhalten wird, **dadurch gekennzeichnet, daß** es durch Ziehen geformt wird.

13. Teil, das nach Anspruch 11 erhalten wird, **dadurch gekennzeichnet, daß** es durch Biegen geformt wird.

14. Teil, das nach Anspruch 11 erhalten wird, **dadurch gekennzeichnet, daß** es durch Profilieren geformt wird.

15. Teil, das nach einem der Ansprüche 11 bis 14 erhalten wird, **dadurch gekennzeichnet, daß** es bei mehr als 160 °C wärmebehandelt wird.

16. Teil nach Anspruch 15, **dadurch gekennzeichnet, daß** es außerdem bei mehr als 180 °C wärmebehandelt wird.

## Claims

1. Formable laminated composite sheet comprising two sheet metal facings joined via a core formed from at least one layer made of polymer materials comprising at least one continuous textile lap of polymer fibres which is impregnated with at least one polymer material for impregnating the lap and for adhering to the said facings, **characterized in that**:
- the said polymer fibres are thermoplastic,
- the said impregnating and adhering polymer material is thermoset.

2. Sheet according to Claim 1, **characterized in that** the continuous textile lap has a tensile elongation at break greater than that of the sheet metal facings.

3. Sheet according to Claim 1 or 2, **characterized in that** the continuous textile lap is needled.

4. Sheet according to any one of Claims 1 to 3, **characterized in that** the said core has a uniform thickness of greater than 0.1 mm and a density of greater than 0.5 kg/dm³.

5. Sheet according to any one of Claims 1 to 4, **characterized in that** the weight of the thermoset impregnating material represents between 30% and 70% of the total weight of the core.

6. Sheet according to any one of Claims 1 to 5, **characterized in that** the said facings are steel sheets.

7. Sheet according to any one of Claims 1 to 6, **characterized in that** the thermoplastic material of the said fibres is chosen from the group comprising polyolefins, polyesters, polyamides, polycarbonates, polyimides, polyacrylics, polymethacrylics and polyvinyl chlorides.

8. Sheet according to any one of Claims 1 to 7, **characterized in that** the impregnating and adhering polymer material is chosen from the group comprising epoxy resins, phenolic resins, polyurethane resins, formaldehyde-ketone resins, urea resins, melamine resins, aniline resins, sulfonamide resins, alkyd resins, unsaturated polyester resins, polybutadiene resins, bismaleimide resins, polyvinyl butyral resins, isocyanate resins and polyimide resins.

9. Sheet according to Claims 7 and 8, **characterized in that** the thermoplastic material of the said fibres is made of polypropylene and **in that** the impregnating and adhering polymer material is made of epoxy resin.

10. Process for manufacturing a formable laminated composite sheet according to any one of Claims 1 to 9, **characterized in that** it comprises:
- a presizing of one face of at least one sheet metal facing using a material comprising at least one thermosetting resin, then
- the application of the presized face of the said sheet metal to a textile lap optionally preimpregnated with one or more thermosetting resins, then
- the application of a second sheet metal facing, optionally presized using a material comprising at least one thermosetting resin, to the other face of the said textile lap, and then
- a treatment to cure the thermosetting resin(s) used.

11. Use of the sheet according to Claims 1 to 9, to make shaped, painted and then heat-treated motor vehicle bodywork parts.

12. Part obtained according to Claim 11, **characterized in that** it is shaped by drawing.

13. Part obtained according to Claim 11, **characterized in that** it is shaped by folding.

14. Part obtained according to Claim 11, **characterized in that** it is shaped by profiling.

15. Part obtained according to any one of Claims 11 to 14, **characterized in that** it is heat-treated at more than 160°C.

16. Part obtained according to Claim 15, **characterized in that** it is also heat-treated at more than 180°C.
